# EUROPEAN PATENT APPLICATION

(11) **EP 1 835 680 A1**
(43) Date of publication of application: **19.09.2007**
(21) Application number: 06290433.9
(22) Date of filing: 16.03.2006
(51) Int. Cl.: H04L 27/26

(54) **OFDM transmission with low latency through use of a pilot symbol at the end of the transmit subframe**

(71) Applicant: Alcatel Lucent, 75008 Paris (FR)
(72) Inventor: Buné, Paul A.M., 70806 Kornwestheim (DE); Rheinschmitt, Rupert, 70825 Korntal (DE); Litzenburger, Manfred, 76646 Bruchsal (DE)
(74) Representative: Brose, Gerhard

(57) **Abstract**

The invention concerns a method for OFDM transmission with low latency, whereby at least one pilot symbol (P, Pf, Ps) is transmitted within a transmission time interval (TTIn), said at least one pilot symbol (P, Pf, Ps) is used for channel estimation, OFDM symbols are equalized according to said channel estimation, at least one forward error correction codeword is decoded after equalization of said OFDM symbols, and one of said at least one pilot symbol (P, Pf) is transmitted in the last OFDM symbol of the transmission time interval (TTIn), a base station, a user terminal and a network therefor.

## Description

The invention relates to a method for OFDM transmission (OFDM = Orthogonal Frequency Division Multiplexing) with low latency according to the preamble of claim 1, a user terminal according to the preamble of claim 4 or 8, a base station according to the preamble of claim 5 or 7, and a network according to the preamble of claim 6 or 9.

Orthogonal Frequency Division Multiplexing (OFDM) radio systems are currently under discussion in many places as e.g. in Third Generation Partnership Project Long Term Evolution (3GPP LTE), the WiFi standard IEEE 802.11 or the WiMax standard IEEE 802.16.

OFDM is a multi-carrier modulation technique. The data is divided among a large number of closely spaced subcarriers. Several bits of a bit stream are mapped on one subcarrier by modulating the complex amplitude by e.g. QPSK (QPSK = Quadrature Phase Shift Keying), 16-QAM or 64-QAM (QAM = Quadrature Amplitude Modulation).

Latency, i.e. the transmission delay over a communication channel, is one of the most critical criteria for an advanced wireless broadband system and should be as small as possible, especially for the support of time-critical services such as VoIP (VoIP = Voice over Internet Protocol) or Videoconference as well as for the support of high capacity packet services, as e.g. file download/upload or gaming.

In 3GPP LTE, it is proposed to have several so-called OFDM symbols combined to a so-called transmission time interval (TTI), also called subframe in 3GPP LTE. Within each transmission time interval, so-called reference symbols, i.e. pilot symbols, are located in the first OFDM symbol. Additional reference symbols can be located in further OFDM symbols of every transmission time interval if such additional reference symbols should be needed.

This OFDM transmission scheme with the proposed pilot symbol distribution is e.g. described in 3GPP TR 25.814 V1.0.3 (2006-2) in section 7.1.1.2.

Pilot symbols are needed to perform channel estimation, i.e. to derive the so-called channel transfer function which in turn is used for equalization of OFDM symbols. Equalization of OFDM symbols must be performed before FEC codewords (FEC = Forward Error Correction) can be decoded. The OFDM symbols containing the complete FEC codewords of a transmission time interval are available at the end of the respective transmission time interval.

As the decoded FEC codewords are needed for evaluation of user data, the point in time when the FEC codewords can be decoded determines the latency of the transmission.

With the pilot symbol distribution proposed in 3GPP LTE, in the time domain either an extrapolation using the previous pilot symbol can be performed, which may introduce a degradation of the transmission quality when a user terminal e.g. in a car moves with a non-negligible speed, or one has to wait for one further OFDM symbol until the next pilot symbols become available, enabling an interpolation using the nearest pilot symbol or a linear interpolation using the previous and the subsequent pilot symbols. The last two methods preserve the transmission quality, but introduce extra latency.

The object of the invention is thus to propose a distribution of pilot symbols that allows for an accurate estimation of the channel transfer function without introducing extra latency.

This object is achieved by a method according to the teaching of claim 1, a user terminal according to the teaching of claim 4 or 8, a base station according to the teaching of claim 5 or 7, and a network according to the teaching of claim 6 or 9.

The main idea of the invention is to transmit pilot symbols in the last OFDM symbol of a transmission time interval, so that at the end of a transmission time interval, when the complete FEC codewords of the respective transmission time interval are available, these pilot symbols are the most recent ones available for channel estimation.
At the same time at the end of the transmission time interval, the pilot symbols of the previous transmission time interval are still available in the receiver memory, so that both nearest pilot interpolation and linear interpolation can be performed for the channel estimation without latency and without complexity increase.

With the novel positioning structure of the pilot symbols, there does not exist a waiting period between the reception of all the OFDM symbols carrying the complete FEC codewords inside a transmission time interval and their equalization, which is a necessary task before single-carrier demodulation and FEC decoding can be performed. The latency is reduced by one OFDM symbol, without any degradation in transmission performance and without any complexity increase in the transmitter or the receiver.

Further developments of the invention can be gathered from the dependent claims and the following description.

In the following the invention will be explained further making reference to the attached drawings.
Fig. 1 schematically shows a network in which the invention can be implemented.
Fig. 2 schematically shows the basic downlink pilot symbol distribution according to the prior art.
Fig. 3 schematically shows the pilot symbol arrangement over three transmission time intervals according to the prior art.
Fig. 4 schematically shows results for the extrapolation and interpolation of the channel transfer function by means of several extrapolation and interpolation principles.
Fig. 5 schematically shows typical graphs of the channel transfer function for the duration of three transmission time intervals at various velocities.
Fig. 6 schematically shows a proposed pilot symbol distribution over three transmission time intervals according to the invention with pilot symbols in one OFDM symbol.
Fig. 7 schematically shows a proposed pilot symbol distribution over three transmission time intervals according to the invention with pilot symbols in two OFDM symbols per transmission time interval.

A network in which the invention can be implemented comprises user terminals and base stations.

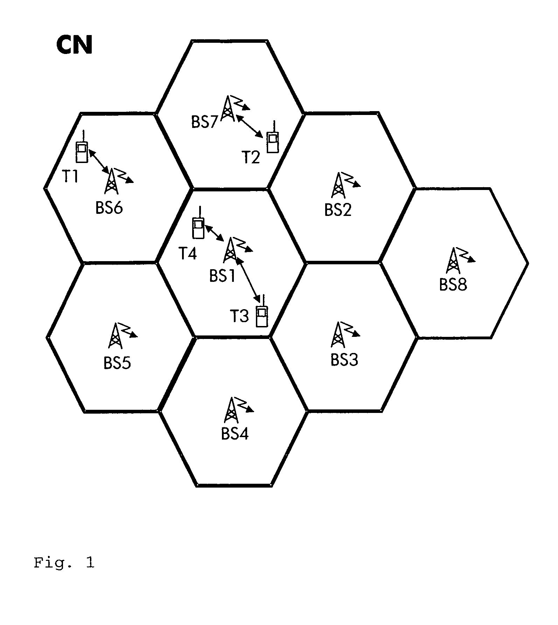

Fig. 1 shows an example for such a network CN that comprises base stations BS1-BS8 and user terminals T1-T4.

Each of said user terminals T1-T4 is connected to one or multiple of said base stations BS1-BS8, which is symbolized by double arrows in fig. 1. The base stations BS1-BS8 are in turn connected to a core network, which is not shown in fig. 1 for the sake of simplicity.

The user terminals T1-T4 comprise the functionality of a user terminal for transmission and reception in a network using OFDM transmission.

Furthermore, a user terminal T1-T4 according to the invention comprises at least one processing means adapted to perform reception of at least one pilot symbol within a transmission time interval, usage of said at least one pilot symbol for channel estimation, equalization of OFDM symbols according to said channel estimation and decoding of at least one forward error correction codeword after equalization of said OFDM symbols, whereby said at least one processing means is adapted to perform reception of one of said at least one pilot symbol in the last OFDM symbol of the transmission time interval.

In another embodiment, a user terminal T1-T4 according to the invention comprises means adapted to perform transmission of at least one pilot symbol within a transmission time interval, whereby said means is adapted to perform transmission of one of said at least one pilot symbol in the last OFDM symbol of the transmission time interval.

The base stations BS1-BS8 comprise the functionality of a base station of a network using OFDM transmission, i.e. they provide the possibility for user terminals to get connected to said network and for data exchange of said user terminals by means of OFDM transmission.

Furthermore, a base station BS1-BS8 according to the invention comprises means adapted to perform transmission of at least one pilot symbol within a transmission time interval, whereby said means is adapted to perform transmission of one of said at least one pilot symbol in the last OFDM symbol of the transmission time interval.

In another embodiment, a base station BS1-BS8 according to the invention comprises at least one processing means adapted to perform reception of at least one pilot symbol within a transmission time interval, usage of said at least one pilot symbol for channel estimation, equalization of OFDM symbols according to said channel estimation and decoding of at least one forward error correction codeword after equalization of said OFDM symbols, whereby said at least one processing means is adapted to perform reception of one of said at least one pilot symbol in the last OFDM symbol of the transmission time interval.

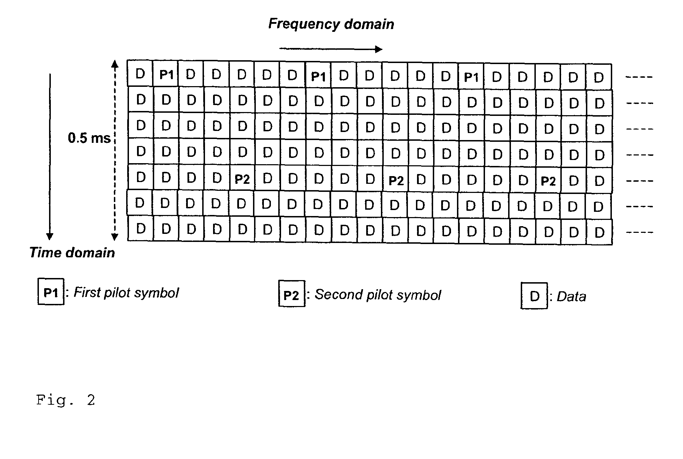

Fig. 2 shows the basic downlink pilot symbol structure according to the prior art disclosed in the technical report 3GPP TR 25.814 V1.0.3 (2006-2) for several subcarriers in the frequency domain of a transmission time interval with exemplary 7 OFDM symbols and a duration of 0.5 ms.

In the time-frequency diagram depicted in Fig. 2, first pilot symbols are denoted with P1, second pilot symbols are denoted with P2 and the transmitted data are denoted with D. According to the technical report 3GPP TR 25.814 V1.0.3 (2006-2), first pilot symbols are located in the first OFDM symbol and additional pilot symbols are located in the third last OFDM symbol of every transmission time interval.

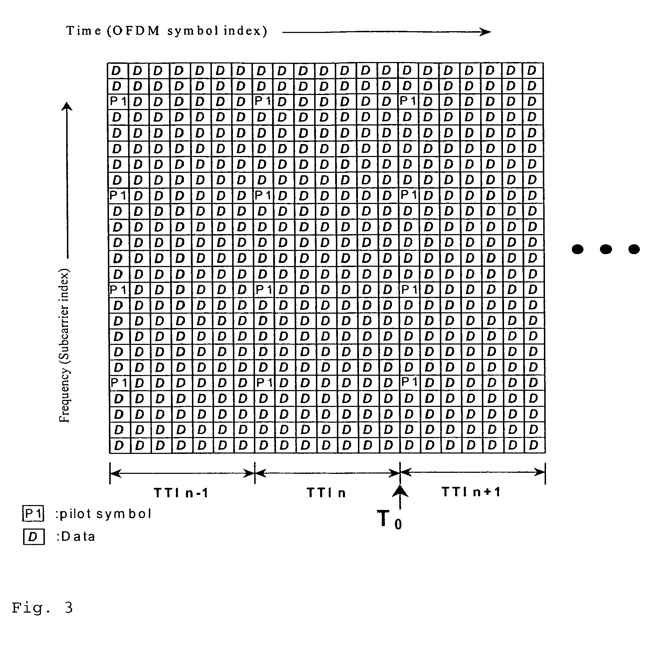

Fig. 3 shows the downlink pilot symbol structure in a time-frequency grid without second pilot symbols for several subcarriers over three transmission time intervals TTIn-1, TTIn and TTIn+1 according to the prior art. Again, the pilot symbols are denoted with P1 and the data are denoted with D. It can be seen that the pilot symbols are repeatedly transmitted in the first OFDM symbol of each transmission time interval.

At the point in time T₀, the OFDM symbols containing the complete FEC codewords of the transmission time interval TTIn are available at the receiver.

Before the subcarrier demodulation and the FEC decoding can be started, the OFDM symbols must be equalized.

At the point in time T₀, the most recent pilot symbols P1 available for channel estimation are those in the first OFDM symbol of the transmission time interval TTIn, which are already 6 OFDM symbols old.

In order to estimate the channel transfer function, the choice is either to perform an extrapolation of previous pilot symbols using the pilot symbols of the first OFDM symbol of the transmission time interval TTIn, which may introduce a degradation of the transmission quality when the user terminal moves with a non-negligible speed, or to wait for one further OFDM symbol till the next pilot symbols become available and which enables an interpolation of the nearest pilot symbols or a linear interpolation of the nearest pilot symbols and the previous pilot symbols. The last two methods preserve the transmission quality, but introduce extra latency.

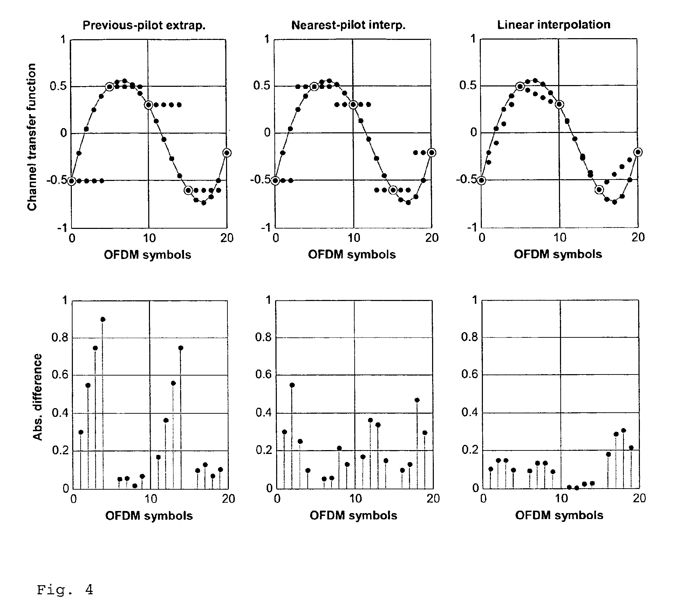

Fig. 4 shows in the upper row three diagrams in which the exemplary run of the real part of the channel transfer function is plotted against OFDM symbols as a solid curve. The values of the real part of the channel transfer function for OFDM symbols that comprise pilot symbols that are used for determination of the channel transfer function are depicted as encircled dots, Said values of the real part of the channel transfer function can be determined by means of evaluation of the pilot symbols. In the example depicted in fig. 4, every fifth OFDM symbol comprises pilot symbols.

In the first diagram, the values of the real part of the channel transfer function that are estimated for each OFDM symbol by means of extrapolation using the previous pilot symbols are depicted as dots that are not connected with each other.

In the second diagram, the values of the real part of the channel transfer function that are estimated for each OFDM symbol by means of interpolation using the nearest pilot symbols are depicted as dots that are not connected with each other.

In the third diagram, the values of the real part of the channel transfer function that are estimated for each OFDM symbol by means of linear interpolation using the previous pilot symbols and the subsequent pilot symbols are depicted as dots that are not connected with each other.

Fig. 4 shows in the lower row three diagrams in which the absolute difference between the exact value of the real part of the channel transfer function and the by means of extrapolation or interpolation estimated value of the real part of the channel transfer function is plotted against the OFDM symbols.

In the first diagram, said absolute difference is plotted for values estimated by means of extrapolation using the previous pilot symbols.

In the second diagram, said absolute difference is plotted for values estimated by means of interpolation using the nearest pilot symbols.

In the third diagram, said absolute difference is plotted for values estimated by means of interpolation using the previous pilot symbols and the subsequent pilot symbols.

With a pilot symbol distribution according to the prior art, extrapolation using the previous pilot symbols is the only method to be used in time-domain channel estimation which does not introduce extra latency. However, in case of a dynamic channel, it results into substantial deviations from the real channel transfer function for those OFDM symbols without pilot symbols, as can be seen in the first diagram in the lower row of fig.4, and therefore into a degradation of the transmission quality. Interpolation using the nearest pilot symbols and to an even greater extent linear interpolation using the previous pilot symbols and the subsequent pilot symbols show a better tracking of the channel transfer function, as can be seen in the second and the third diagram respectively in the lower row of fig.4, resulting into higher transmission quality. The computational complexity is about the same for all three methods, being very small when compared to the over-all receiver complexity.

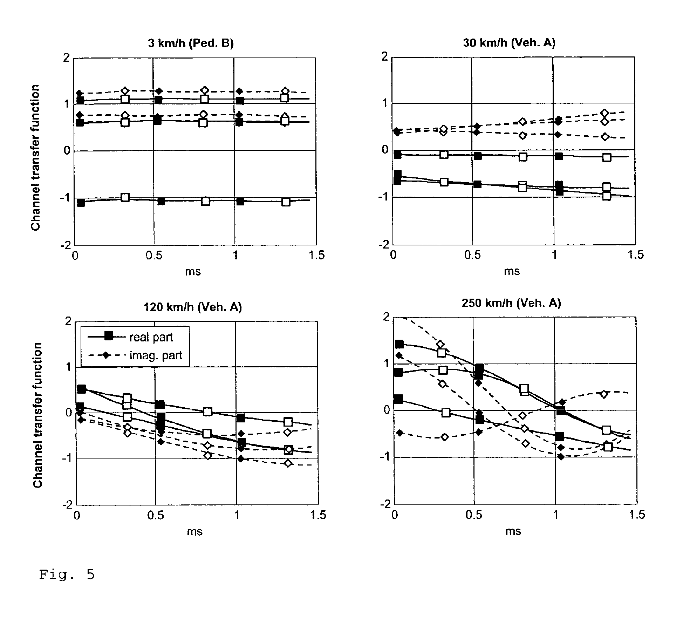

Fig.5 shows in 4 diagrams typical runs of the channel transfer function for user terminals at a velocity of 3km/h, of 30 km/h, of 120 km/h and of 250 km/h for the duration of three transmission time intervals with each transmission time interval having a duration of 0.5 ms. The real part of the channel transfer function is depicted as a solid line, and the imaginary part of the channel transfer function is depicted as a dotted line.

The values of the real part of the channel transfer function for OFDM symbols that comprise first pilot symbols according to the prior art that are used for determination of the channel transfer function are depicted as filled squares.

The values of the real part of the channel transfer function for OFDM symbols that comprise second pilot symbols according to the prior art that are used for determination of the channel transfer function are depicted as open squares.

The values of the imaginary part of the channel transfer function for OFDM symbols that comprise first pilot symbols according to the prior art that are used for determination of the channel transfer function are depicted as filled diamonds.

The values of the imaginary part of the channel transfer function for OFDM symbols that comprise second pilot symbols according to the prior art that are used for determination of the channel transfer function are depicted as open diamonds.

According to the diagrams in fig. 5, at and above a velocity of the user terminals of 30 km/h, an extrapolation using previous pilot symbols to estimate the channel transfer function can only preserve the transmission quality by using the second pilot symbols.

At a velocity of the user terminals of 120 km/h and above, extrapolation using previous pilot symbols to estimate the channel transfer function can not preserve the transmission quality any longer even with the second pilot symbols being used.

The interpolation using nearest pilot symbols to estimate the channel transfer function must use the second pilot symbols at and above a velocity of the user terminals of 120 km/h and can not preserve the transmission quality any longer at and above a velocity of the user terminals of 250 km/h even with the second pilot symbols being used.

On the contrary, linear interpolation using the previous pilot symbols and the subsequent pilot symbols to estimate the channel transfer function shows a very narrow tracking even at 250 km/h, even without having to use the second pilot symbols.

Thus, being the most robust algorithm, linear interpolation is the preferred method. However, as already mentioned, the pilot symbol distribution according to the prior art allows the use of linear interpolation and also interpolation using nearest pilot symbols only with the drawback of extra latency.

According to the invention, a new pilot symbol distribution is proposed that enables the application of linear interpolation using the previous pilot symbols and the subsequent pilot symbols and also interpolation using nearest pilot symbols to estimate the channel transfer function without extra latency as well as without extra complexity compared to the extrapolation method using previous pilot symbols.

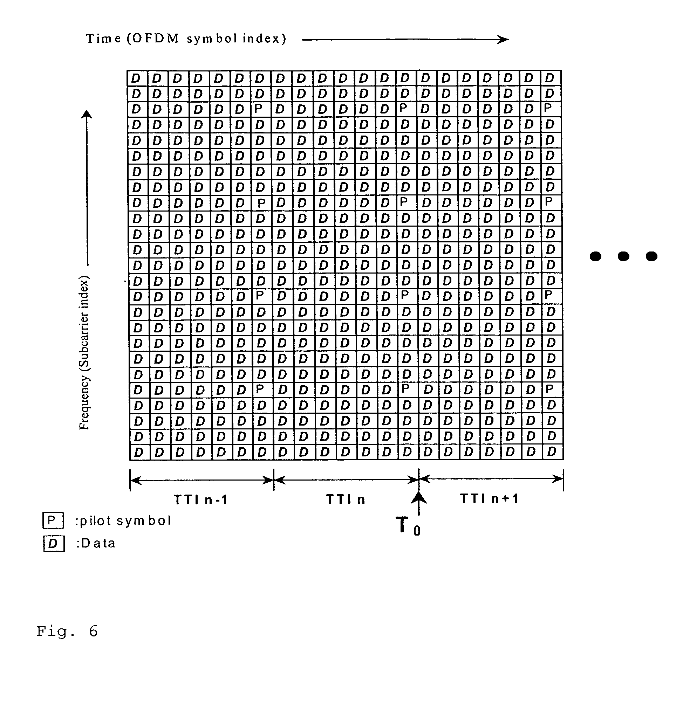

Fig. 6 shows the downlink pilot symbol structure in a time-frequency grid without second pilot symbols for several subcarriers over three transmission time intervals TTIn-1, TTIn and TTIn+1 according to the invention. The pilot symbols are denoted with P and the data are denoted with D. It can be seen that the pilot symbols are repeatedly transmitted in the last OFDM symbol of each transmission time interval.

At the point in time T₀, the OFDM symbols containing the complete FEC codewords of the transmission time interval TTIn are available at the receiver, as this is the case in the prior art.

Before the subcarrier demodulation and the FEC decoding can be started, the OFDM symbols must be equalized, as this is the case in the prior art.

At the point in time T₀, the most recent pilot symbols P available for channel estimation are those in the last OFDM symbol of the transmission time interval TTIn, i.e. said most recent pilot symbols can be used without delay.

At the same point in time T₀, the pilot symbols of the previous transmission time interval TTIn-1 are still available in receiver memory, i.e. the novel pilot symbol distribution enables both interpolation using nearest pilot symbols and preferred linear interpolation using the previous pilot symbols and the subsequent pilot symbols to estimate the channel transfer function without latency and without complexity increase.

As already mentioned, when applying linear interpolation using the previous pilot symbols and the subsequent pilot symbols to estimate the channel transfer function, no second pilot symbols in a transmission time interval are needed at and below a velocity of 250 km/h of the user terminal, thus saving resources for pilot allocation and possibly also for signalling.

In case that second pilot symbols in a transmission time interval should be necessary e.g. because they will be required by standardization, a pilot symbol distribution according to the invention comprising second pilot symbols in a transmission time interval is proposed.

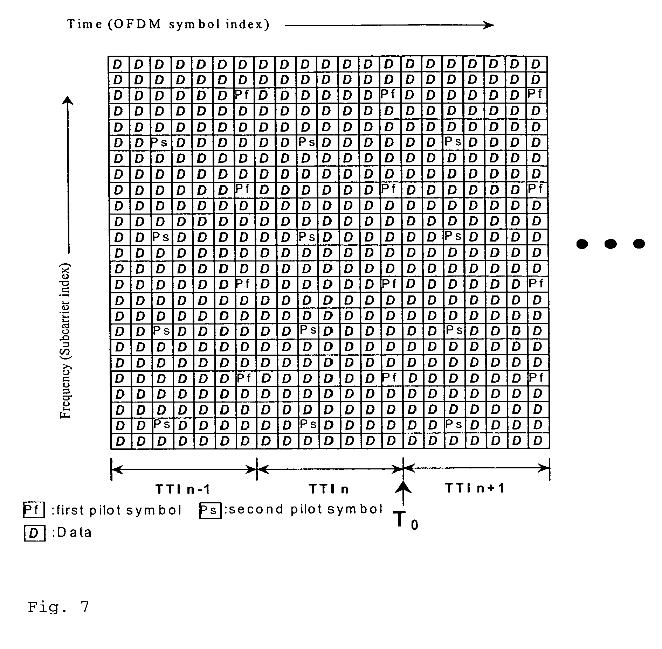

Fig. 7 shows exemplarily such a pilot symbol structure in a time-frequency grid with first and second pilot symbols for several subcarriers over three transmission time intervals TTIn-1, TTIn and TTIn+1 according to the invention. The first pilot symbols are located in the last OFDM symbol of each transmission time interval and are denoted with Pf, the second pilot symbols are located in the third OFDM symbol of each transmission time interval and are denoted with Ps, and the data are denoted with D. It can be seen that the pilot symbols are repeatedly transmitted in each transmission time interval. The location of the second pilot symbols in the third OFDM symbol of each transmission time interval is just an example, as the second pilot symbols can be placed in any other OFDM symbol besides the last one.

## Claims

1. A method for OFDM transmission with low latency, whereby at least one pilot symbol (P, Pf, Ps) is transmitted within a transmission time interval (TTIn), said at least one pilot symbol (P, Pf, Ps) is used for channel estimation, OFDM symbols are equalized according to said channel estimation and at least one forward error correction codeword is decoded after equalization of said OFDM symbols, **characterized in, that** one of said at least one pilot symbol (P, Pf) is transmitted in the last OFDM symbol of the transmission time interval (TTIn).

2. A method according to claim 1, **characterized in, that** said one of said at least one pilot symbol (P, Pf) is used to perform channel estimation for adjacent OFDM symbols by means of interpolation in the time domain.

3. A method according to claim 1, **characterized in, that** said one of said at least one pilot symbol (P, Pf) and another pilot symbol (P, Pf, Ps) preceding to said one of said at least one pilot symbol are used to perform channel estimation by means of linear interpolation in the time domain.

4. A user terminal (T1-T4) comprising at least one processing means adapted to perform reception of at least one pilot symbol (P, Pf, Ps) within a transmission time interval, usage of said at least one pilot symbol (P, Pf, Ps) for channel estimation, equalization of OFDM symbols according to said channel estimation and decoding of at least one forward error correction codeword after equalization of said OFDM symbols, **characterized in, that** said at least one processing means is adapted to perform reception of one of said at least one pilot symbol (P, Pf) in the last OFDM symbol of the transmission time interval.

5. A base station (BS1-BS8) comprising means adapted to perform transmission of at least one pilot symbol (P, Pf, Ps) within a transmission time interval, **characterized in, that** said means is adapted to perform transmission of one of said at least one pilot symbol (P, Pf) in the last OFDM symbol of the transmission time interval.

6. A network (CN) using OFDM transmission with low latency that comprises at least one base station comprising means adapted to perform transmission of at least one pilot symbol (P, Pf, Ps) within a transmission time interval and that comprises at least one user terminal comprising at least one processing means adapted to perform reception of said at least one pilot symbol (P, Pf, Ps) within a transmission time interval, usage of said at least one pilot symbol (P, Pf, Ps) for channel estimation, equalization of OFDM symbols according to said channel estimation and decoding of at least one forward error correction codeword after equalization of said OFDM symbols **characterized in, that** said means is adapted to perform transmission of one of said at least one pilot symbol (P, Pf) in the last OFDM symbol of the transmission time interval and said at least one processing means is adapted to perform reception of said one of said at least one pilot symbol (P, Pf) in the last OFDM symbol of the transmission time interval.

7. A base station (BS1-BS8) comprising at least one processing means adapted to perform reception of at least one pilot symbol (P, Pf, Ps) within a transmission time interval, usage of said at least one pilot symbol (P, Pf, Ps) for channel estimation, equalization of OFDM symbols according to said channel estimation and decoding of at least one forward error correction codeword after equalization of said OFDM symbols, **characterized in, that** said at least one processing means is adapted to perform reception of one of said at least one pilot symbol (P, Pf) in the last OFDM symbol of the transmission time interval.

8. A user terminal (T1-T4) comprising means adapted to perform transmission of at least one pilot symbol (P, Pf, Ps) within a transmission time interval, **characterized in, that** said means is adapted to perform transmission of one of said at least one pilot symbol (P, Pf) in the last OFDM symbol of the transmission time interval.

9. A network (CN) using OFDM transmission with low latency that comprises at least one user terminal comprising means adapted to perform transmission of at least one pilot symbol (P, Pf, Ps) within a transmission time interval and that comprises at least one base station comprising at least one processing means adapted to perform reception of said at least one pilot symbol (P, Pf, Ps) within a transmission time interval, usage of said at least one pilot symbol (P, Pf, Ps) for channel estimation, equalization of OFDM symbols according to said channel estimation and decoding of at least one forward error correction codeword after equalization of said OFDM symbols **characterized in, that** said means is adapted to perform transmission of one of said at least one pilot symbol (P, Pf) in the last OFDM symbol of the transmission time interval and said at least one processing means is adapted to perform reception of said one of said at least one pilot symbol (P, Pf) in the last OFDM symbol of the transmission time interval.

## Amended claims

### Amended claims in accordance with Rule 86(2) EPC.

**1.** A method for OFDM transmission with low latency, whereby at least one pilot symbol (P, Pf, Ps) is transmitted within a transmission time interval (TTIn), said at least one pilot symbol (P, Pf, Ps) is used for channel estimation, OFDM symbols are equalized according to said channel estimation and at least one forward error correction codeword is decoded after equalization of said OFDM symbols, whereby one of said at least one pilot symbol (P, Pf) is transmitted in the last OFDM symbol of the transmission time interval (TTIn) **characterized in, that** said one of said at least one pilot symbol (P, Pf) and another pilot symbol (P, Pf, Ps) preceding to said one of said at least one pilot symbol are used to perform channel estimation by means of one of linear interpolation and nearest-pilot interpolation in the time domain.

**2.** A user terminal (T1-T4) comprising at least one processing means adapted to perform reception of at least one pilot symbol (P, Pf, Ps) within a transmission time interval, usage of said at least one pilot symbol (P, Pf, Ps) for channel estimation, equalization of OFDM symbols according to said channel estimation and decoding of at least one forward error correction codeword after equalization of said OFDM symbols, whereby one of said at least one processing means is adapted to perform reception of one of said at least one pilot symbol (P, Pf) in the last OFDM symbol of the transmission time interval **characterized in, that** one of said at least one processing means is adapted to perform channel estimation by means of one of linear interpolation and nearest-pilot interpolation in the time domain using said one of said at least one pilot symbol (P, Pf) and another pilot symbol (P, Pf, Ps) preceding to said one of said at least one pilot symbol.

**3.** A network (CN) using OFDM transmission with low latency that comprises at least one base station comprising means adapted to perform transmission of at least one pilot symbol (P, Pf, Ps) within a transmission time interval and that comprises at least one user terminal comprising at least one processing means adapted to perform reception of said at least one pilot symbol (P, Pf, Ps) within a transmission time interval, usage of said at least one pilot symbol (P, Pf, Ps) for channel estimation, equalization of OFDM symbols according to said channel estimation and decoding of at least one forward error correction codeword after equalization of said OFDM symbols, whereby said means is adapted to perform transmission of one of said at least one pilot symbol (P, Pf) in the last OFDM symbol of the transmission time interval and said at least one processing means is adapted to perform reception of said one of said at least one pilot symbol (P, Pf) in the last OFDM symbol of the transmission time interval **characterized in, that** said at least one processing means is adapted to perform channel estimation by means of one of linear interpolation and nearest-pilot interpolation in the time domain using said one of said at least one pilot symbol (P, Pf) and another pilot symbol (P, Pf, Ps) preceding to said one of said at least one pilot symbol.

**4.** A base station (BS1-BS8) comprising at least one processing means adapted to perform reception of at least one pilot symbol (P, Pf, Ps) within a transmission time interval, usage of said at least one pilot symbol (P, Pf, Ps) for channel estimation, equalization of OFDM symbols according to said channel estimation and decoding of at least one forward error correction codeword after equalization of said OFDM symbols, whereby said at least one processing means is adapted to perform reception of one of said at least one pilot symbol (P, Pf) in the last OFDM symbol of the transmission time interval **characterized in, that** one of said at least one processing means is adapted to perform channel estimation by means of of one of linear interpolation and nearest-pilot interpolation in the time domain using said one of said at least one pilot symbol (P, Pf) and another pilot symbol (P, Pf, Ps) preceding to said one of said at least one pilot symbol.

**5.** A network (CN) using OFDM transmission with low latency that comprises at least one user terminal comprising means adapted to perform transmission of at least one pilot symbol (P, Pf, Ps) within a transmission time interval and that comprises at least one base station comprising at least one processing means adapted to perform reception of said at least one pilot symbol (P, Pf, Ps) within a transmission time interval, usage of said at least one pilot symbol (P, Pf, Ps) for channel estimation, equalization of OFDM symbols according to said channel estimation and decoding of at least one forward error correction codeword after equalization of said OFDM symbols, whereby said means is adapted to perform transmission of one of said at least one pilot symbol (P, Pf) in the last OFDM symbol of the transmission time interval and said at least one processing means is adapted to perform reception of said one of said at least one pilot symbol (P, Pf) in the last OFDM symbol of the transmission time interval **characterized in, that** said at least one processing means is adapted to perform channel estimation by means of one of linear interpolation and nearest-pilot interpolation in the time domain using said one of said at least one pilot symbol (P, Pf) and another pilot symbol (P, Pf, Ps) preceding to said one of said at least one pilot symbol.
